# EUROPÄISCHE PATENTSCHRIFT

(11) **EP 0 831 504 B1**
(45) Veröffentlichungstag und Bekanntmachung des Hinweises auf die Patenterteilung: **19.11.2003**
(21) Anmeldenummer: 97202868.2
(22) Anmeldetag: 18.09.1997
(51) Int. Cl.: H01H 25/06, B60R 16/02, G06K 11/18

(54) **Elektronisches Gerät mit einem bidirektionalen Drehschalter**
Electronic apparatus with a bidirectional rotary switch
Appareil électronique avec un interrupteur rotatif bidirectionnel

(30) Priorität: 24.09.1996 DE 19639119
(43) Veröffentlichungstag der Anmeldung: 25.03.1998
(73) Patentinhaber: Siemens Aktiengesellschaft, 80333 München (DE)
(72) Erfinder: Hengst, Axel, Röntgenstrasse 24, 22335 Hamburg (DE)

(56) Entgegenhaltungen:
- EP-A- 0 705 612
- WO-A-94/17494
- US-A- 3 184 557
- US-A- 5 270 689

## Beschreibung

Die Erfindung bezieht sich auf ein Verfahren zur Auswahl und Aktivierung von Funktionselementen und/oder Funktionsgruppen eines elektronischen Gerätes mit einem bidirektionalen Drehschalter nach dem Oberbegriff des Anspruchs 1.

Ein derartiges elektronisches Gerät ist beispielsweise aus der US 5 270 689 bekannt. Der Drehschalter dieses bekannten Gerätes weist Raststellungen auf, denen einzelne Funktionselemente zugeordnet sind. Mittels Drehung des Drehschalters können die einzelnen Funktionselemente nacheinander angewählt werden. Die Aktivierung eines ausgewählten Funktionselementes, d.h., die Auslösung einer Enterfunktion erfolgt mittels Drücken des Druckschalters. Die einzelnen Funktionselemente können sowohl zur Auslösung einer Funktion als auch zum Aufruf einer anderen Funktionsgruppe, insbesondere von Unterfunktionsgruppen, vorgesehen sein. Um von einer übergeordneten Funktionsgruppe zu einer untergeordneten Funktionsgruppe zu gelangen, muss innerhalb der übergeordneten Funktionsgruppe mittels Drehen das Funktionselement der untergeordneten Funktionsgruppe ausgewählt und mittels Druck aktiviert werden. Um von einer untergeordneten Funktionsgruppe zu einer übergeordneten Funktionsgruppe zu gelangen, ist innerhalb der untergeordneten Funktionsgruppe ein Funktionselement der übergeordneten Funktionsgruppe vorgesehen, welches durch Drehen ausgewählt und durch Drücken aktiviert werden kann, so dass ein Rücksprung in die übergeordnete Funktionsgruppe erfolgt .

Weiter kann durch axiale Bewegung des Drehschalters in eine Richtung eine Enterfunktion ausgelöst werden und durch axiale Bewegung in die andere Richtung eine Korrekturmöglichkeit vorgesehen sein.

Es ist Aufgabe der Erfindung, ein elektronisches Gerät der eingangs genannten Art zu schaffen, welches es dem Benutzer ermöglicht, zwischen den einzelnen Funktionsgruppen einfach und intuitiv hin und her zu schalten.

Diese Aufgabe ist erfindungsgemäß durch ein Verfahren nach Anspruch 1 gelöst.

Bei einem derartigen elektronischen Gerät ist es nicht nötig, ein Funktionselement anzuzeigen, welches bei Aktivierung ein Verlassen der Funktionsgruppe bzw. der Funktion bewirkt. Ein Verlassen der Funktionsgruppe bzw. der Funktion ist immer mittels Ziehen des Drehknopfes auslösbar. Dadurch wird Platz für andere Informationen auf dem Bildschirm frei.

Die Bedienung eines derartigen Drehknopfes ist intuitiv. Das Drücken des Drehknopfes ist leicht zu assoziieren mit der Aktion "Funktionselement auswählen". Das Ziehen des Drehknopfes ist sowohl physikalisch als auch logisch die entgegengesetzte Aktion, eben das Verlassen der momentanen Funktionsgruppe bzw. Funktion.

Der Drehmechanismus ist mittels eines Inkrementgebers ohne Anschlag realisierbar. Zwischen der Drehbewegung und der Anzeige auf dem Bildschirm besteht ein Formschluss, d.h., bei jedem mechanischen Schritt des Inkrementgebers wird um ein Funktionselement "weitergeblättert". Dadurch ist es auch ohne Blickkontakt möglich, die einzelnen Funktionselemente einer Funktionsgruppe anzuwählen.

Es ist erfindungsgemäß vorgesehen, dass den einzelnen Funktionen jeweils eine Funktionsgruppe mit einzelnen Funktionselementen zugeordnet ist, und dass jeweils eine Zugbewegung des Drehschalters dazu vorgesehen ist, zwischen der Funktion und der der Funktion zugeordneten Funktionsgruppe hin und her zu wechseln.

Bei einer derartigen netzwerkartigen Menüstruktur ist jede einzelne Funktion jeweils mit einer Funktionsgruppe verknüpft, welche in Abhängigkeit der Funktion jeweils ein oder mehrere Funktionselemente aufweist, die mit der Funktion in Zusammenhang stehen.

Wenn ein Funktionselement einer Funktionsgruppe aktiviert wird, wird die zugehörige Funktion ausgeführt, z.B. eine Information angezeigt. Gleichzeitig werden die Funktionselemente der der Funktion zugeordneten Funktionsgruppe angezeigt, ohne die Information zu verdecken. Dadurch hat der Benutzer immer den Überblick über die mit einer bestimmten Funktion verknüpften Funktionselemente. Sollte es aus Platzgründen notwendig sein, ist auch denkbar, dass die Funktionsgruppe mit den Funktionselementen zeitweise von der Funktion überdeckt wird oder nur auf Anfrage erscheint.

Mittels der Zugbewegung des Drehschalters wird jeweils zwischen der Funktion und der der Funktion zugeordneten Funktionsgruppe hin und her geschaltet.

Ist die jeweilige Funktion ausgewählt, so wird mittels eines Zuges des Drehschalters die de Funktion zugeordnete Funktionsgruppe ausgewählt. Mittels Drehen des Drehschalters können dann die einzelnen Funktionselemente der Funktionsgruppe angewählt werden und mittels eines Druckers aktiviert werden. Mittels Ziehen des Drehschalters kann von der Funktionsgruppe wieder in die Funktion übergewechselt werden. Innerhalb der Funktion ist es dann z. B. möglich, einzelne Unterfunktionselemente der Funktion anzuwählen. Diese können ebenfalls wieder mit speziellen Funktionsgruppen verknüpft sein.

Um an Funktionselemente zu gelangen, die nicht in der einer Funktion zugeordneten Funktionsgruppe vorhanden sind, ist es möglich, zusätzlich ein hierarchisch strukturiertes Menü vorzusehen, in dem alle Funktionselemente vorhanden sind. Dazu könnte z. b. jede Funktionsgruppe, die einer Funktion zugeordnet ist, als Funktionselement das Funktionselement "Menü" aufweisen. Wird dieses Funktionselement "Menü" mittels Druck des Drehschalters aktiviert, so wird eine hierarchische Menüstruktur aufgerufen.

Bei einer hierarchischen Gliederung der Funktionsgruppe wird mittels einer Zugbewegung des Drehschalters immer die übergeordnete Funktionsgruppe aufgerufen, unabhängig davon, welches Funktionselement in der momentanen Funktionsgruppe gerade ausgewählt ist.

Für die Auswahl einer untergeordneten Funktionsgruppe muss zunächst mittels Drehen des Drehschalters das entsprechende Funktionselement ausgewählt werden, welches bei Aktivierung die gewünschte untergeordnete Funktionsgruppe aufruft. Nach Auswahl des gewünschten Funktionselementes wird dieses dann durch Drücken des Drehknopfes aktiviert, und die gewünschte untergeordnete Funktionsgruppe wird aufgerufen.

Die Hauptfunktionsgruppe eines Bordmonitorsystems eines Kraftfahrzeuges kann beispielsweise die Funktionselemente, Navigation, Radio, Bordcomputer, Telefon und Fernsehen, enthalten. Wird dann beispielsweise das Funktionselement Radio mittels des Drehschalters ausgewählt und durch Drücken des Drehschalters aktiviert, so wird die Funktionsgruppe Radio aufgerufen, welche die Funktionselemente Kassette, Tuner und CD enthalten kann. Wird innerhalb der Funktionsgruppe Radio das Funktionselement Kassette ausgewählt und durch Drücken des Drehschalters aktiviert, so wird die Funktionsgruppe Kassette aufgerufen, welche beispielsweise die Funktionselemente "Spielen in Vorwärtsrichtung", "Spielen in Rückwärtsrichtung", "Vorspulen" und "Zurückspulen" enthalten kann. Wird nun das Funktionselement "Spielen in Vorwärtsrichtung" mittels Drücken des Drehschalters aktiviert, so wird die Funktion "Spielen in Vorwärtsrichtung" ausgeführt. Auf dem Bildschirm können dann z.B. Informationen über die Spielzeit der einzelnen Titel, die Restspielzeit usw. angezeigt werden. Mittels Ziehen des Drehschalters kann nun wieder die Funktionsgruppe Kassette aufgerufen werden. Ist die Funktionsgruppe Kassette "aufgerufen", so wird durch nochmaliges Ziehen des Drehknopfes die übergeordnete Funktionsgruppe Radio aufgerufen und durch erneutes Ziehen des Drehknopfes die Hauptfunktionsgruppe. Diese Funktionsweise ist unabhängig davon, welches Funktionselement der Funktionsgruppe gerade aufgerufen war. Wird beispielsweise in der Funktionsgruppe Kassette der Drehschalter gezogen, so wird immer die Funktionsgruppe Radio aufgerufen, unabhängig davon, ob vor dem Ziehen das Funktionselement "Spielen in Vorwärtsrichtung", "Spielen in Rückwärtsrichtung", "Vorspulen" oder "Zurückspulen" ausgewählt war.

Bei einer weiteren vorteilhaften Ausgestaltung der Erfindung ist vorgesehen, dass der Drehknopf in Richtung auf eine Mittelstellung vorgespannt ist, so dass bei einem Loslassen des Drehknopfes dieser selbsttätig die Mittelstellung einnimmt.

Eine derartige Vorspannung in Richtung auf die Mittelstellung kann z. B. mittels zweier Federn realisiert werden. Wird der Drehknopf von der Bedienperson nach einer Druck- oder Zugbewegung losgelassen, so springt er infolge der Federverspannung selbsttätig in die Mittelstellung zurück. Dadurch wird eine sichere Funktion des Drehknopfes bei Druck- und Zugbewegung gewährleistet. Insbesondere wird bei mehreren aufeinanderfolgenden Druck- bzw. Zugbewegungen sichergestellt, dass jede einzelne Druck- bzw. Zugbewegung auch jeweils nur ein Funktionselement aktiviert bzw. jeweils nur eine übergeordnete bzw. vorherige Funktionsgruppe aufruft.

Nach einer weiteren vorteilhaften Ausgestaltung der Erfindung ist vorgesehen, daß die Drehfunktion des Drehknopfes bei der Druckbewegung und der Zugbewegung des Drehknopfes gesperrt ist.

Eine weitere vorteilhafte Ausgestaltung der Erfindung ist dadurch gekennzeichnet, daß ein Druckpunkt zur mechanischen Bestätigung der Zugfunktion und der Druckfunktion vorgesehen ist.

Beim Drücken und Ziehen des Drehknopfes muß von der Bedienperson ein Druckpunkt überwunden werden. Dies gibt der Bedienperson eine mechansiche Bestätigung, daß mittels des Drückens bzw. des Ziehens eine Operation ausgeführt worden ist.

Eine weitere vorteilhafte Ausgestaltung der Erfindung ist dadurch gekennzeichnet, daß eine Zusatzfunktion vorgesehen ist, falls der Drehknopf länger als eine vorgebbare Zeitspanne gezogen wird.

Als eine derartige Zusatzfunktion ist z.B. denkbar, daß ein Rücksprung in die Hauptfunktionsgruppe erfolgt, falls der Drehknopf z.B. länger als 3 Sekunden gezogen wird.

Das erfindungsgemäße elektronische Gerät kann vorzugsweise in einem Navigationssystem verwendet werden.

Die Erfindung wird nachfolgend anhand der Zeichnung in den Fig. 1 bis 4 näher erläutert. Es zeigen:
Fig. 1 den prinzipiellen Aufbau eines bekannten Drehschalters in Seitenansicht,
Fig. 2 den prinzipiellen Aufbau des bekannten Drehschalters in Draufsicht,
Fig. 3 vier aufeinanderfolgende Bildschirmanzeigen mit einer hierarchischen Gliederung von Funktionsgruppen,
Fig. 4 sechs aufeinanderfolgende Bildschirmanzeigen eines Ausführungsbeispiels der Erfindung, wobei einzelnen Funktionen jeweils eine individuelle Funktionsgruppe zugeordnet ist.

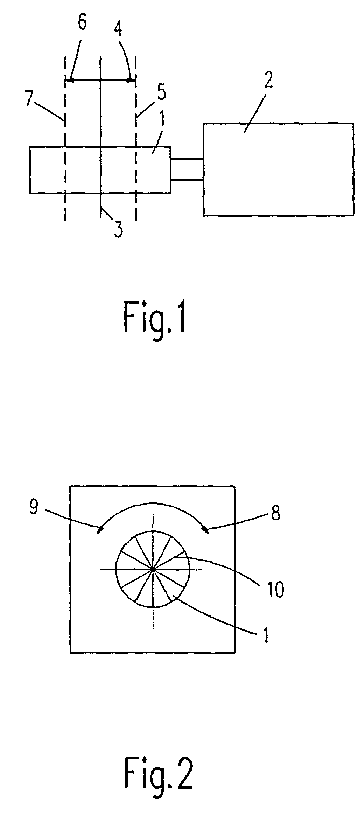

Fig. 1 zeigt einen Drehschalter 1 eines schematisch dargestellten elektronischen Gerätes 2 in Seitenansicht. Der Drehschalter 1 befindet sich in einer Mittelstellung 3. Ausgehend von dieser Mittelstellung 3 kann der Drehknopf 1 in Richtung des Pfeiles 4 in eine Druckstellung 5 gedrückt werden. In entgegengesetzter Richtung kann der Drehknopf 1, ausgehend von der Mittelstellung 3, in Richtung eines Pfeiles 6 in eine Zugstellung 7 gezogen werden. Der Drehknopf 1 ist in Richtung auf die Mittelstellung 3 mittels nicht dargestellter Federn vorgespannt, so daß er, falls er von der Bedienperson losgelassen wird, sowohl von der Druckstellung 5 als auch von der Zugstellung 7 selbsttätig in die Mittelstellung 3 zurückspringt.

Fig. 2 zeigt den Drehknopf 1 gemäß Fig. 1 in Draufsicht. Der Drehknopf 1 kann von einer Bedienperson in Richtung des Pfeiles 8 im Uhrzeigersinn gedreht werden und in Richtung des Pfeiles 9 entgegen dem Uhrzeigersinn gedreht werden. Der Drehmechanismus des Drehknopfes 1 ist mittels eines Inkrementgebers ohne Anschlag realisiert. Der Inkrementgeber unterteilt eine volle Umdrehung des Drehschalters 1 in diesem Beispiel in zwölf Schritte. Jedem einzelnen Schritt ist jeweils eine Raststellung 10 zugeordnet.

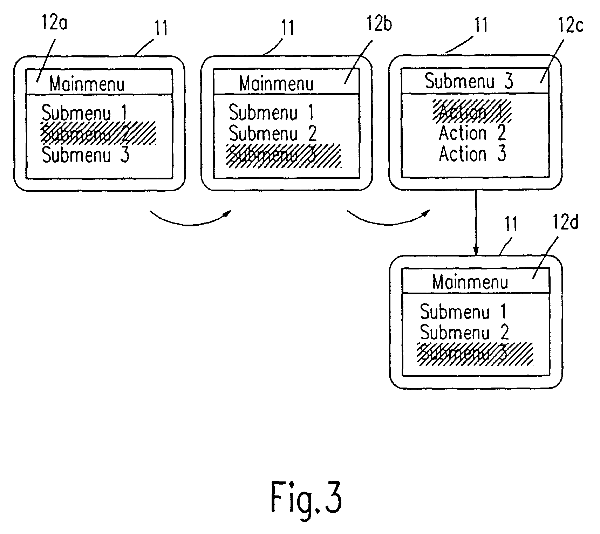

Fig. 3 zeigt einen Bildschirm 11, auf dem vier aufeinanderfolgende Bildschirmanzeigen 12a, 12b, 12c und 12d dargestellt sind, wobei die einzelnen Funktionsgruppen hierarchisch gegeliedert sind. In der Bildschirmanzeige 12a ist die Funktionsgruppe Hauptmenü aufgerufen, welche als Funktionselemente das Untermenü 1, das Untermenü 2 und das Untermenü 3 aufweist. Das Funktionselement Untermenü 2 ist in der Bildschirmanzeige 12a ausgewählt und daher optisch hervorgehoben dargestellt. Mittels Drehen des Drehschalters 1 um einen Drehschritt im Uhrzeigersinn gelangt man zu der Bildschirmanzeige 12b. In dieser Bildschirmanzeige 12b ist das Untermenü 3 ausgewählt und dementsprechend optisch hervorgehoben dargestellt. Um das Untermenü 3 aufzurufen, muß das Funktionselement Untermenü 3 der Funktionsgruppe Hauptmenü aktiviert werden. Dies erfolgt durch Drücken des Drehschalters 1. Mittels Drücken des Drehschalters 1 gelangt man von der Bildschirmanzeige 12b zu der Bildschirmanzeige 12c. In der Bildschirmanzeige 12c ist die Funktionsgruppe Untermenü 3 aufgerufen, welche als Funktionselemente das Funktionselement Aktion 1, das Funktionselement Akton 2 und das Funktionselement Aktion 3 aufweist. Das Funktionselement Aktion 1 ist in der Bildschirmanzeige 12c ausgewählt und optisch hervorgehoben dargestellt. Durch Drehen des Drehschalters 1 im Uhrzeigersinn können nacheinander die Funktionselemente Aktion 2 und das Funktionselement Aktion 3 ausgewählt werden. Um eines der Funktionselemente Aktion 1, Aktion 2 und Aktion 3 zu aktivieren, muß dieses zunächst mittels Drehen des Drehschalters 1 ausgewählt werden und in diesem ausgewählten Zustand durch Drücken des Drehschalters 1 aktiviert werden.

Der Rücksprung von der Funktionsgruppe Untermenü 3 in die übergeordnete Funktionsgruppe Hauptmenü kann mittels Ziehen des Drehschalters 1 realisiert werden. Dabei erfolgt der Rücksprung von der Funktionsgruppe Untermenü 3 in die Funktionsgruppe Hauptmenü unabhängig davon, welches Funktionselement der Funktionsgruppe Untermenü 3 gerade ausgewählt und optisch hervorgehoben ist. Bei dem Rücksprung von der Funktionsgruppe Untermenü 3 in die Funktionsgruppe Hauptmenü ist zunächst dasjenige Funktionselement der Funktionsgruppe Hauptmenü ausgewählt und optisch hervorgehoben, welches beim vorherigen Verlassen der Funktionsgruppe Hauptmenü gerade ausgewählt war.

Bei einem Bordmonitorsystem eines Kraftfahrzeuges kann das Untermenü 1 beispielsweise gleich dem Untermenü Navigation sein, das Untermenü 2 gleich dem Untermenü Radio und das Untermenü 3 gleich dem Untermenü Bordcomputer. Das Untermenü 3 (Bordcomputermenü) kann dann in diesem Beispiel als Aktion 1 z.B. den Benzinverbrauch anzeigen, als Aktion 2 beispielsweise den Ölstand anzeigen und als Aktion 3 den Reifendruck anzeigen.

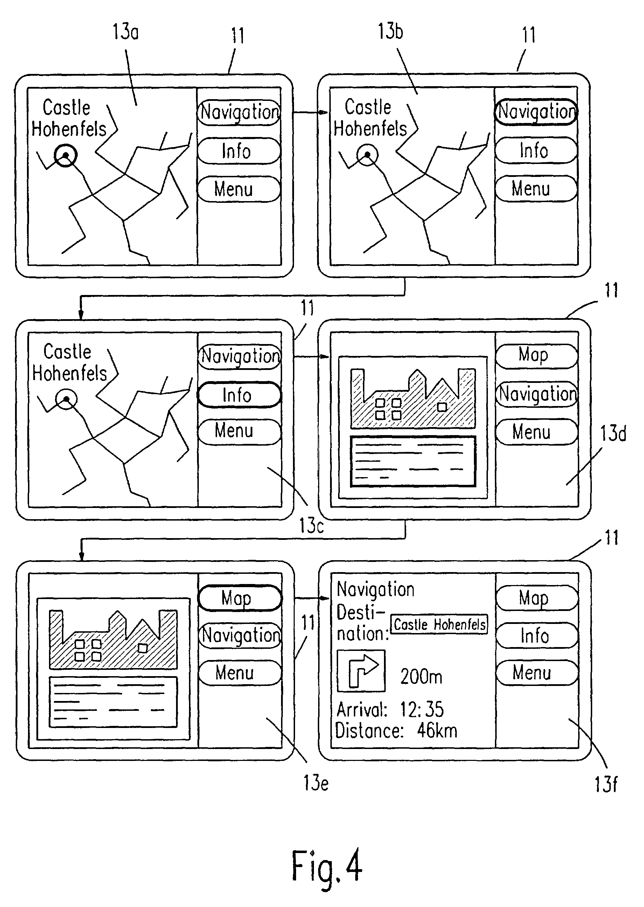

Fig. 4 zeigt den Bildschirm 11, auf dem sechs aufeinanderfolgende Bildschirmanzeigen 13a, 13b, 13c, 13d, 13e und 13f eines Ausführungsbeispiels der Erfindung dargestellt sind.

In der Bildschirmanzeige 13a ist die Funktion "Karte" aufgerufen. Innerhalb der Funktion "Karte" ist als Unterfunktionselement das Kartenelement "Schloß Hohenfels" ausgewählt und daher optisch hervorgehoben dargestellt. Dem Kartenelement "Schloß Hohenfels" ist die Funktionsgruppe "Schloß Hohenfels" mit den Funktionselementen "Navigation", "Info" und "Menue" zugeordnet.

Mittels einer Zugbewegung des Drehschalters 1 gelangt man zu der Bildschirmanzeige 13b. In dieser Bildschirmanzeige 13b ist die Funktionsgruppe "Schloß Hohenfels" aufgerufen und innerhalb dieser Funktionsgruppe "Schloß Hohenfels" das Funktionselement Navigation ausgewählt und optisch hervorgehoben dargestellt.

Mittels Drehen des Drehschalters 1 um einen Drehschritt im Uhrzeigersinn gelangt man zu der Bildschirmanzeige 13c. In dieser Bildschirmanzeige 13c ist innerhalb des der Funktionsgruppe "Schloß Hohenfels" das Funktionselement "Info" ausgewählt. Mittels Druck des Drehschalters 1 wird das Funktionselement "Info" aktiviert und die Funktion "Info" aufgerufen. Dies ist in der Bildschirmanzeige 13d dargestellt. Innerhalb der Funktion "Info" ist als Unterfunktionselement ein Infoelement mit einer angedeuteten Textpassage ausgewählt und optisch hervorgehoben dargestellt.

Mittels Ziehen des Drehschalters 1 gelangt man in die der Funktion "Info" zugeordnete Funktionsgruppe "Info", welche die Funktionselemente "Karte", "Navigation" , und "Menü" aufweist. Innerhalb der Funktionsgruppe "Info" ist das Funktionselement "Karte" ausgewählt und optisch hervorgehoben dargestellt. Dies zeigt die Bildschirmdarstellung 13e.

Mittels eines Drehschrittes und eines nachfolgenden Druckes des Drehschalters 1 gelangt man zu der Bildschirmdarstellung 13f. In dieser Bildschirmdarstellung 13f ist die Funktion "Navigation" aufgerufen. Die der Funktion "Navigation" zugeordnete Funktionsgruppe "Navigation" enthält die Funktionselemente "Karte" , "Info" und "Menü".

Mittels des Funktionselementes "Menue" kann ein hierarchisch strukturiertes Menue aufgerufen werden, mittels dessen man auch die Funktionselemente aufrufen kann, die nicht mit der Funktion "Navigation" verknüpft sind und demzufolge nicht in der Funktionsgruppe "Navigation" vorhanden sind.

Im obigen Beispiel gibt es drei Funktionen (Info, Karte, Navigation), die alle mit dem gleichen Unterfunktionselement "Schloß Hohenfels" arbeiten können. Der Benutzer hat in der Funktion "Karte" dieses Unterfunktionselement "Schloß Hohenfels" ausgewählt, und das System stellt in der Funktionsgruppe "Schloß Hohenfels" die Funktionselemente "Navigation", "Info" und "Menü" zur Verfügung. Gäbe es keine weiteren Informationen über das Schloß, würde das Funktionselement "Info" in der Funktionsgruppe "Schloß Hohenfels" nicht auftauchen.

## Patentansprüche

1. Verfahren zur Auswahl und Aktivierung von Funktionselementen und/oder Funktionsgruppen eines elektronischen Gerätes mit einem bidirektionalen Drehschalter (1)
- zur Auswahl von einzelnen Funktionselementen von Funktionsgruppen mittels der Drehbewegung des Drehschalters (1) und
- zur Aktivierung der einzelnen Funktionselemente mittels einer Druckbewegung des Drehschalters (1), wodurch wenigstens eine Funktion und/oder eine Funktionsgruppe aufrufbar ist, und
- zum Verlassen einer Funktionsgruppe und/oder einer Funktion mittels einer Zugbewegung des Drehschalters (1), **dadurch gekennzeichnet, dass** eine netzwerkartige Struktur vorgesehen ist, wobei den einzelnen ersten Funktionen jeweils eine Funktionsgruppe mit einzelnen Funktionselementen zugeordnet ist, wodurch andere Funktionen als die erste Funktion aufrufbar sind, und dass jeweils eine Zugbewegung des Drehschalters (1) dazu vorgesehen ist, zwischen der ersten Funktion und der der ersten Funktion zugeordneten Funktionsgruppe hin und her zu wechseln.

2. Verfahren nach Anspruch 1, **dadurch gekennzeichnet, dass** zusätzlich ein hierarchisches strukturiertes Menü vorgesehen ist, in dem alle Funktionselemente vorhanden sind, und dass zum Aufruf jeweils einer übergeordneten Funktionsgruppe in dem hierarchisch strukturierten Menü jeweils eine Zugbewegung des Drehschalters (1) vorgesehen ist.

3. Verfahren nach Anspruch 1 oder 2, **dadurch gekennzeichnet, dass** der Drehschalter (1) in Richtung auf eine Mittelstellung vorgespannt ist, so dass bei einem Loslassen des Drehschalters (1) dieser selbsttätig die Mittelstellung einnimmt.

4. Verfahren nach einem der Ansprüche 1 bis 3, **dadurch gekennzeichnet, dass** die Drehfunktion des Drehschalters (1) bei der Druckbewegung und der Zugbewegung des Drehschalters (1) gesperrt ist.

5. Verfahren nach einem der Ansprüche 1 bis 4, **dadurch gekennzeichnet, dass** ein Druckpunkt zur mechanischen Bestätigung der Zugfunktion und der Druckfunktion vorgesehen ist.

6. Verfahren nach einem der Ansprüche 1 bis 5, **dadurch gekennzeichnet, dass** eine Zusatzfunktion vorgesehen ist, falls der Drehschalter (1) länger als eine vorgebbare Zeitspanne gezogen wird.

7. Verfahren nach einem der vorhergehenden Ansprüche, **dadurch gekennzeichnet, dass** das elektronische Gerät ein Navigationssystem ist.

## Claims

1. Method for selecting and activating function elements and/or function groups of an electronic apparatus with a bidirectional rotary switch (1)
- in order to select individual function elements of function groups by means of the rotary movement of the rotary switch (1) and
- in order to activate the individual function elements by means of a pressing movement of the rotary switch (1), as a result of which at least one function and/or a function group can be called, and
- in order to exit a function group and/or a function by means of a pulling movement of the rotary switch (1), **characterized in that** a network-like structure is provided, in each case a function group with individual function elements being assigned to the individual first functions, as a result of which functions other than the first function can be called, and **in that** in each case a pulling movement of the rotary switch (1) is provided for changing to and fro between the first function and the function group assigned to the first function.

2. Method according to Claim 1, **characterized in that**, in addition, a hierarchically structured menu is provided in which all function elements are present, and **in that** in each case a pulling movement of the rotary switch (1) is provided for calling in each case a superordinate function group in the hierarchically structured menu.

3. Method according to Claim 1 or 2, **characterized in that** the rotary switch (1) is prestressed in the direction of a central position so that, when the rotary switch (1) is released, the latter automatically assumes the central position.

4. Method according to one of Claims 1 to 3, **characterized in that** the rotary function of the rotary switch (1) is disabled during the pressing movement and the pulling movement of the rotary switch (1).

5. Method according to one of Claims 1 to 4, **characterized in that** a pressure point is provided for mechanically confirming the pulling function and the pressing function.

6. Method according to one of Claims 1 to 5, **characterized in that** an additional function is provided if the rotary switch (1) is pulled for longer than a predefinable time period.

7. Method according to one of the preceding claims, **characterized in that** the electronic apparatus is a navigation system.

## Revendications

1. Procédé pour la sélection et l'activation d'éléments fonctionnels et/ou de groupes de fonctions d'un appareil électronique comprenant un commutateur rotatif bidirectionnel
- pour la sélection d'éléments fonctionnels particuliers dans des groupes de fonctions par le mouvement rotatif du commutateur rotatif (1) et
- pour l'activation des éléments fonctionnels particuliers par un mouvement de poussée sur le commutateur rotatif (1), mettant en oeuvre au moins une fonction et/ou un groupe de fonctions, et
- pour l'abandon d'un groupe de fonctions et/ou une fonction par un mouvement de traction du commutateur rotatif (1),
**caractérisé en ce qu'**une structure réticulée est prévue, dans laquelle un groupe de fonctions comprenant des éléments fonctionnels particuliers est affecté aux premières fonctions particulières permettant d'appeler d'autres fonctions que la première fonction, et **en ce qu'**un mouvement de traction du commutateur rotatif (1) est prévu pour basculer entre la première fonction et le groupe de fonctions dans lequel appartient la première fonction.

2. Procédé selon la revendication 1, **caractérisé en ce qu'**un menu structuré en hiérarchie est additionnellement prévu contenant tous les éléments fonctionnels, et qu'un mouvement de traction du commutateur rotatif (1) est prévu pour appeler un groupe superordonné dans le menu hiérarchiquement structuré.

3. Procédé selon la revendication 1 ou 2, caractérisé que le commutateur rotatif (1) est précontraint en direction d'une position médiane de sorte que le commutateur rotatif (1) prend automatiquement cette position médiane lorsqu'il est lâché.

4. Procédé selon l'une des revendications 1 à 3, **caractérisé en ce que** la fonction rotative du commutateur rotatif (1) est bloquée lors des mouvements de poussée et de traction.

5. Procédé selon l'une des revendications 1 à 4, **caractérisé en ce qu'**un point de poussée est prévu pour la confirmation mécanique de la fonction de traction et de la fonction de poussée.

6. Procédé selon l'une des revendications 1 à 5, **caractérisé en ce qu'**une fonction additionnelle est prévue si le commutateur rotatif (1) est tiré plus longtemps qu'un laps de temps prédéterminé.

7. Procédé selon l'une des revendications précédentes, **caractérisé en ce que** l'appareil électronique est un système de navigation.
